# NEUE EUROPÄISCHE PATENTSCHRIFT

(11) **EP 0 220 526 B2**
(45) Veröffentlichungstag und Bekanntmachung des Hinweises auf die Entscheidung über den Einspruch: **13.01.1993**
(45) Hinweis auf die Patenterteilung: 26.04.1989
(21) Anmeldenummer: 86113591.1
(22) Anmeldetag: 02.10.1986
(51) Int. Cl.: F16B 37/02, F16B 39/284

(54) **Selbstsichernde klammerartige Blechmutter**
Self-locking clip-like sheet metal nut
Ecrou en tôle à autoblocage formant pince

(30) Priorität: 12.10.1985 DE 3536473
(43) Veröffentlichungstag der Anmeldung: 06.05.1987
(73) Patentinhaber: A. Raymond KG, D-79539 Lörrach (DE)
(72) Erfinder: Müller, Klaus, D-7859 Weil-Haltingen (DE); Mutz, Bernd, D-7860 Schopfheim 3 (DE); Daler, Helmo, D-7850 Lörrach (DE)

(56) Entgegenhaltungen:
- EP-A- 0 106 451
- DE-A- 3 121 771
- DE-C- 2 849 840
- GB-A- 1 082 688
- US-A- 2 140 064
- US-A- 3 308 708

## Beschreibung

Die Erfindung bezieht sich auf eine selbstsichernde Blechmutter der im Oberbegriff angegebenen Art. Derartige Blechmuttern werden verwendet, um mehrere plattenförmige Bauteile wie beispielsweise Bleche mittels einer Blechschraube zusammenzuhalten. Hierbei sollen die am Gewindekern mit Federkraft anliegenden Sicherungslappen verhindern, daß sich die Schraube durch Erschütterungen oder Vibrationen, wie sie beispielsweise bei einem Kraftfahrzeug ständig auftreten, von selbst lösen.

Eine solche Blechmutter ist beispielsweise aus der US-A-2 140 064 bekannt. Allerdings sind dort als Sicherungslappen zwei am Gewinde anliegende Teile vorgesehen, die als gegeneinandergerichtete kurze Zungen ausgebildet und in erster Linie dazu bestimmt sind, das eingedrehte Schraubengewinde mitzutragen.

Diese Gewindezungen müssen zur Erfüllung ihrer Tragefunktion relativ starr und biegesteif ausgebildet sein und sind daher als Mittel zur Sicherung des Schraubengewindes gegen selbsttätiges Lösen eigentlich ungeeignet, weil die auf den Gewindekern wirkende Klemmkraft nicht festgelegt ist. Hinzu kommt noch der Wunsch des Kunden, daß solche Blechmuttern nach dem Lösen ohne Beeinträchtigung der Trage- und Klemmeigenschaften wiederverwendbar sein müssen, was bei der bekannten Blechmutter kaum anzunehmen ist.

Aufgabe der Erfindung ist es daher, bei der klammerartigen Blechmutter die Sicherungslappen so zu gestalten, daß eine konstruktiv festlegbare Klemmkraft mit gleichbleibender Klemmwirkung erreicht wird und die Rückstellkraft auch nach mehrmaligem Eindrehen der Schraube voll erhalten bleibt.

Diese Aufgabe wird erfindungsgemäß dadurch gelöst, daß der erste Sicherungslappen und die beiden Stege des zweiten Sicherungslappens durch Schlitze voneinander getrennt sind, welche bis an den Gewindeschenkel heranreichen.

Durch diese Gestaltungsmaßnahmen wird auf einfache Weise erreicht, daß die Sicherungslappen beim Eindrehen der Schraube vom Schraubenkern etwa senkrecht zur Schraubenachse weggedrückt werden, wobei die elastische Deformation im bogenförmigen Verbindungsbereich zwischen den Lappen und dem Gewindeschenkel erfolgt. Der erste Sicherungslappen selbst und die beiden Außenstege werden nur auf Druck bzw. Zug belastet und nehmen an der elastischen Deformation praktisch nicht teil.

Um das elastische Verhalten der Verbindungsbögen möglichst voll auszuschöpfen, ist der Schlitz zwischen dem ersten Sicherungslappen und den beiden Außenstegen über die Verbindungsbögen hinaus bis auf den Gewindeschenkel heruntergezogen. Hierbei ist es für die axiale Führung der Schraube im Gewindegang günstig, wenn die Stege zusammen die gleiche Breite haben wie der erste Sicherungslappen.

In der Zeichnung ist eine bevorzugte Ausführungsform der Erfindung dargestellt und soll nachfolgend näher erläutert werden.

Es zeigen
Fig. 1 eine Ausführungsform der Blechmutter in Seitenansicht,
Fig. 2 die Blechmutter in Draufsicht,
Fig. 3 die gleiche Blechmutter im montierten Zustand im Schnitt,
Fig. 4 die montierte Blechmutter in Draufsicht,

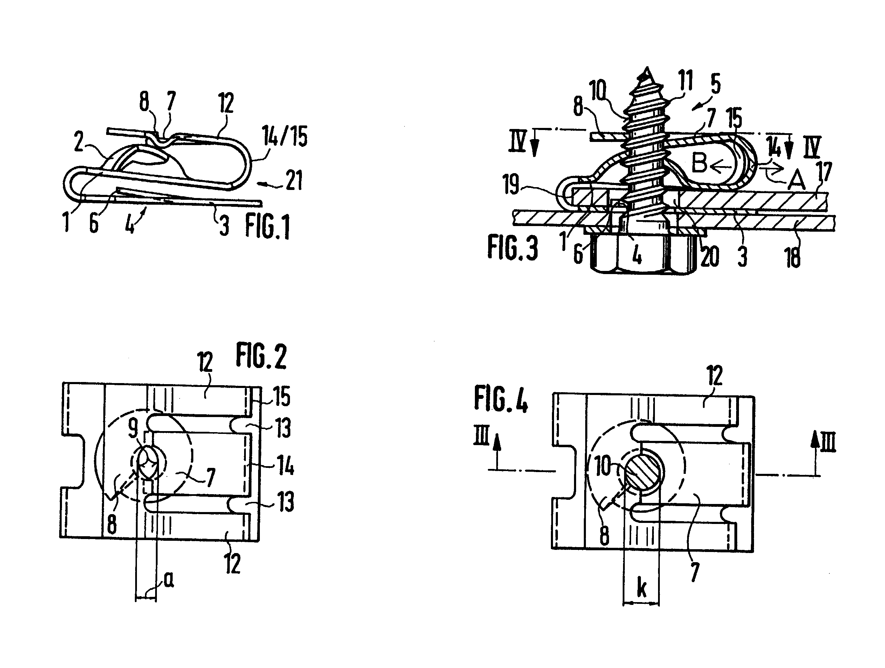

Die vorliegende Blechmutter dient, wie aus Fig. 3 ersichtlich, zur Verbindung plattenförmiger Bauteile 17,18 und besteht im wesentlichen aus einem Gewindeschenkel 1 mit einem ausgeprägten Gewindegang 2 und einem mit dem Gewindeschenkel 1 U-förmig verbundenen Klammerschenkel 3 mit einem Durchgangsloch 4 zum Durchführen einer in den Gewindegang eindrehbaren Blechschraube 5. Der Gewindeschenkel 1 ist hierbei zum Klammerschenkel 3 hin etwas geneigt, so daß beim Aufdrücken der Blechmutter auf die Kante 19 der Trägerplatte 17 der Gewindeschenkel 1 etwas hochgebogen und die Trägerplatte 17 zwischen Gewindeschenkel 1 und Klammerschenkel 3 fest eingeklemmt wird. Das Durchgangsloch 4 ist von einem Zentrierring 6 umgeben, der beim Aufdrücken der Blechmutter in das entsprechende Befestigungsloch 20 der Trägerplatte 17 einrastet.

Bei der in den Fig. 1 bis 4 dargestellten Blechmutter sind zwei Sicherungslappen 7 und 8 angeformt und zur Gewindeprägung 2 hin über Verbindungsbogen 14 und 15 herumgeführt. Diese Lappen 7 und 8 sind mit bogenförmigen Klemmkanten 9 versehen, welche sich beim Eindrehen der Blechschraube 5 in den Gewindegang 2 von beiden Seiten eng an den Gewindekern 10 anlegen, von diesem auseinandergedrückt werden und durch die dabei in den Verbindungsbögen 14 und 15 erzeugte Rückstellkraft die Schraube 5 gegen selbsttätiges Lösen sichern. Es versteht sich, daß der Abstand "a" zwischen den Kanten 9 im Anlieferungszustand der Blechmutter kleiner sein muß als der Kerndurchmesser "k" der Schraube 5, und zwar um so viel kleiner, daß eine ausreichende Klemmkraft erzeugt wird.

Beide Sicherungslappen 7 und 8 sind auf einer Seite der Gewindeprägung 2 angeformt und zwar an dem in Aufsteckrichtung der Blechmutter vorderen Ende 21 des Schenkels 1. Hierbei ist der eine Lappen 7 mittig am Schenkel 1 angeformt und greift auch von dieser Seite in das Schraubengewinde 11 ein. Der andere Lappen 8 hingegen wird von der Rückseite her an das Schraubengewinde 11 herangeführt und ist über zwei am Durchgangsbereich der Schraube 5 vorbeigeführte Stege 12 mit dem vorderen Ende 21 des Gewindeschenkels 1 verbunden. Die Stege 12 verlaufen parallel zum ersten Sicherungslappen 7 und sind von diesem durch je einen schmalen Schlitz 13 getrennt. Die Schlitze 13 sind bis zum Gewindeschenkel 1 heruntergezogen, um das elastische Verhalten der Verbindungsbögen 14 und 15 voll auszunutzen. Um ein gleichmäßiges Ausweichen der Sicherungslappen 7,8 zu gewährleisten, haben die Stege 12 zusammen die gleiche Breite wie der erste Sicherungslappen 7.

Beide Lappen 7 und 8 wie auch die Stege 12 liegen etwa in einer Ebene senkrecht zur Achse der Schraube 5. Dadurch wird erreicht, daß der erste Sicherungslappen 7 bis zum Beginn des Bogens 14 nur auf Druck und die Stege 12 bis zur gleichen Stelle des Bogens 15 nuraufZug beanspruchtwerden, während die Bögen 14 und 15 auf Biegung beansprucht werden. Wie aus Fig. 3 und 4 ersichtlich, wird beim Eindrehen der Schraube 5 der mittlere Bogen 14 in Richtung des Pfeiles A nach außen gedrückt, während die beiden äußeren Bögen 15 in Richtung des Pfeiles B gezogen werden und zwar jeweils zur Hälfte des Betrages, den der Abstand "a" zwischen den halbkreisförmigen Kanten 9 im entspannten Zustand kleiner ist als der Kerndurchmesser "k" der Schraube 5.

## Patentansprüche

1. Selbstsichernde klammerartige Blechmutter, bestehend aus einem Gewindeschenkel (1) mit einer Gewindeprägung (2) und einem mit einem Durchgangsloch (4) versehenen Klammerschenkel (3) sowie zwei am Gewindeschenkel (1) angeformten und zur Gewindeprägung U-förmig herumgebogenen Sicherungslappen (7, 8), deren gegeneinandergerichtete, bogenförmige Klemmkanten einen kleineren Abstand voneinander haben als der Kerndurchmesser einer Blechschraube, für den der Gewindegang der Gewindeprägung (2) ausgelegt ist, wobei beide Sicherungslappen (7, 8) von einer Seite des Gewindeschenkels (1) derart abgebogen sind, daß der erste Sicherungslappen (7) mit seiner endseitigen bogenförmigen Klemmkante (9) direkt gegen die Gewindeprägung (2) gerichtet ist und der zweite Sicherungslappen (8) mit seinem freien Endteil über die Gewindeprägung (2) hinausragt, und das Endteil als Verbindungsstück zweier mit Abstand voneinander angeordneter, den ersten Sicherungslappen (7) zwischen sich aufnehmender Stege (12) ausgebildet ist und die bogenförmige Klemmkante (9) des zweiten Sicherungslappens (8) an dem Endteil zwischen den beiden Stegen (12) angeordnet ist,
dadurch gekennzeichnet, daß
der erste Sicherungslappen (7) und die beiden Stege (12) des zweiten Sicherungslappens (8) durch Schlitze (13) voneinander getrennt sind, welche bis an den Gewindeschenkel (1) heranreichen.

2. Blechmutter nach Anspruch 1, dadurch gekennzeichnet, daß die Stege (12) zusammen die gleiche Breite haben wie der erste Sicherungslappen (7).

## Claims

1. A self-locking clip-like sheet metal nut comprising a screwthread limb (1) with a screwthread stamping (2) and a clip limb (3) provided with a through hole (4), and two locking tangs (7, 8) which are formed on the screwthread limb (1) and which are bent round in a U-shape relative to the screwthread stamping and whose oppositely directed, arcuate clamping edges are at a smaller spacing from each other from the core diameter of a self- tapping screw forwhich the thread of the screwthread stamping (2) is designed, wherein both locking tangs (7, 8) are bent away from one side of the screwthread limb (1) in such a way that the first locking tang (7) is directed with its arcuate clamping edge (9) at its end, directly towards the screwthread stamping (2), and the second locking tang (8) projects with its free end portion beyond the screwthread stamping (2), and wherein the end portion is in the form of a connecting portion for two spaced-apart web portions (12) which accommodate the first locking tang (7) between them, and the arcuate clamping edge (9) of the second locking tang (8) is arranged on the end portion between the two web portions (12),
characterised in that the first locking tang (7) and the two web portions (12) of the second locking tang (8) are separated from each other by slits (13) which extend to the screwthread limb (1).

2. A sheet metal nut according to claim 1 characterised in that the web portions (12) are together of the same width as the first locking tang (7).

## Revendications

1. Ecrou en tôle à auto-blocage formant pince constituée d'une branche supérieure (1) munie d'une empreinte (2), d'une branche formant pince (3) munie d'une perforation (4) ainsi que de deux languettes de blocage (7, 8) venant en prolongement de la branche supérieure (1) et repliées en forme de U en direction de l'empreinte, dont les arêtes de serrage cintrées, dirigées l'une vers l'autre, ont un écartement inférieur au diamètre du noyau d'une vis à tôle, pour laquelle est prévu le filetage de l'empreinte (2), les deux languettes de blocage (7, 8) étant repliées d'un côté à partir de la branche supérieure (1) de telle façon que la première languette de blocage (7) est directement dirigée, au niveau de son arête de serrage cintrée (9), vers l'empreinte (2) et que la seconde languette de blocage (8) fait saillie par dessus l'empreinte (2) au niveau de son extrémité libre conformée en pièce de liaison entre les deux barettes (12) espacées l'une par rapport à l'autre et séparées par la première languette de blocage (7), et que l'arête de serrage cintrée (9) de la seconde languette de blocage (8) est disposée à son extrémité entre les deux barettes (12), caractérisé par le fait que
la première languette de blocage (7) et les deux barettes (12) de la seconde languette de blocage (8) sont séparées par des fentes (13) qui se prolongent jusqu'à la branche supérieure (1).

2. Ecrou en tôle selon première revendication caractérisé en ce que les barettes (12) ont ensemble la même largeur que la première languette de blocage (7).
